# EUROPEAN PATENT APPLICATION

(11) **EP 1 112 841 A2**
(43) Date of publication of application: **04.07.2001**
(21) Application number: 00126703.8
(22) Date of filing: 05.12.2000
(51) Int. Cl.: B32B 27/12, E04H 15/00

(54) **Pigment-applied film assembly**

(30) Priority: 27.12.1999 JP 37182299
(71) Applicant: TAIYO KOGYO CORPORATION, Osaka (JP); Acoustick Corporation, Osaka (JP)
(72) Inventor: Tadokoro, Hiromoto, c/oTaiyo Kogyo Corporation, Hirakata-shi, Osaka (JP); Hanawa, Yasuyuki, c/oTaiyo Kogyo Corporation, Hirakata-shi, Osaka (JP); Uemura, Toshiaki, c/oTaiyo Kogyo Corporation, Osaka (JP); Maki, Hidefumi, c/oAccoustick Corporation, Osaka (JP)
(74) Representative: Leyh, Hans, Dr.-Ing.

(57) **Abstract**

The present invention relates to a pigment-applied film assembly (1) comprising a substrate fabric (4), a pigment layer (5) applied to the outer surface (2, 3) of said fabric (4), and a transparent resin film (8) welded to the respective outer surface (2, 3) of said fabric (4) and pigment layer (5), said pigment-applied film assembly (1) being used as a leisure-facilities tent or the like.

## Description

The present invention relates to a pigment-applied film assembly comprising a substrate fabric, a pigment layer applied to the outer surface of said fabric, and a transparent resin film welded to the respective outer surfaces of said fabric and pigment layer, said pigment-applied film assembly being used as a leisure-facilities tent or the like.

### BACKGROUND OF THE INVENTION

As for said pigment-applied film assembly, there is a known one constructed as follows.

This conventional pigment-applied film assembly comprises a substrate fabric with at least one of its two outer surfaces being plain, a pigment layer applied to said one outer surface of said substrate fabric, and a transparent resin film covering the respective outer surfaces of a nonpigment-applied portion defined on said one outer surface of said substrate fabric and said pigment layer from the outside and welded to these outer surfaces.

And said conventional pigment-applied film assembly is installed in a predetermined location in facilities in such a manner that said one outer surface of the substrate fabric faces outdoors or indoors, so that the pigment-applied film assembly separates the outdoor and indoor areas of facilities from each other, thereby preventing rainwater or wind from entering the facilities.

Further, said pigment layer in said conventional pigment-applied film assembly provides a color pattern to appeal to vision, thereby enhancing the appearance of the facilities.

In this connection, as described above, in the conventional pigment-applied film assembly, a transparent resin film is welded to the respective outer surfaces of said nonpigment-applied portion defined in said one outer surface of the substrate fabric and said pigment-applied layers. This prior technique, however, has the following problem.

Since the outer surfaces of said substrate fabric are usually rough surfaces, the adhesion strength of the transparent resin film to said nonpigment-applied portion, which is part of the outer surface of the substrate fabric, is sufficiently secured.

However, since said pigment layer is composed of powder, the repetitive application of an external force, such as wind pressure, to said pigment-applied film assembly produces tensile stress in said pigment layer, so that such pigment layer tends to break in the intermediate portion thereof in the thickness direction, thus presenting the danger that the transparent resin film will easily peel from the substrate fabric in the applied positions of said pigment layer.

Accordingly, it may be contemplated to reduce the area of each pigment layer; this, however, limits the design of said pigment-applied film assembly, presenting the danger of the appearance of the pigment-applied film assembly being degraded.

### SUMMARY OF THE INVENTION

In the case where a pigment-applied film assembly comprises a substrate fabric, a pigment layer applied to the outer surface of said substrate fabric, and a transparent resin film welded to the respective outer surfaces of said substrate fabric and pigment layer, it is an object of the invention to prevent the transparent resin film from easily peeling from the substrate fabric in the applied position of said pigment layer by an external force applied to said pigment-applied film assembly, thereby improving the life of the pigment-applied film assembly.

Another object of the invention is to keep the appearance of the pigment-applied film assembly in good condition even when peeling is prevented as described above.

The present invention is such that in a pigment-applied film assembly comprising a substrate fabric with at least one of its two outer surfaces being plain, a pigment layer applied to said one outer surface of said substrate fabric, and a transparent resin film covering the respective outer surfaces of a nonpigment-applied portion defined on said one outer surface of said substrate fabric and said pigment layer from the outside and welded to these outer surfaces,
said pigment layer is formed with a number of fine passageways whose width extending in the thickness direction is very small and/or cross-sectional area is very small, part of said transparent resin film being filled in these fine passageways by fusion and welded to said substrate fabric, said fine passageways being arranged at substantially equal intervals in the directions along the outer surface of said substrate fabric.

Other objects, arrangements, functions and effects of the invention than those described above will be made apparent by a detailed description of the invention to be given below with reference to the accompanying drawings.

### BRIEF DESCRIPTION OF THE DRAWINGS

The drawings show a preferred embodiment of the invention.
Fig. 1 is a fragmentary enlarged side view, in section, of a pigment-applied film assembly and a screen;
Fig. 2 is a fragmentary enlarged plan view of the pigment-applied film assembly;
Fig. 3 is a fragmentary enlarged plan view of the screen; and
Fig. 4 is a view corresponding to Fig. 1, showing another embodiment.

### DETAILED DESCRIPTION OF THE PREFERRED EMBODIMENTS

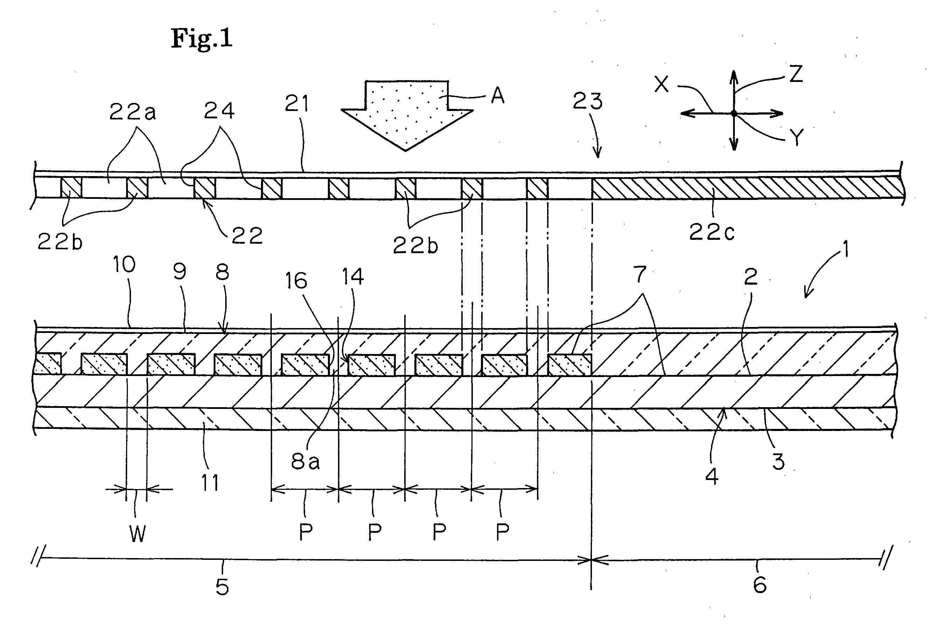

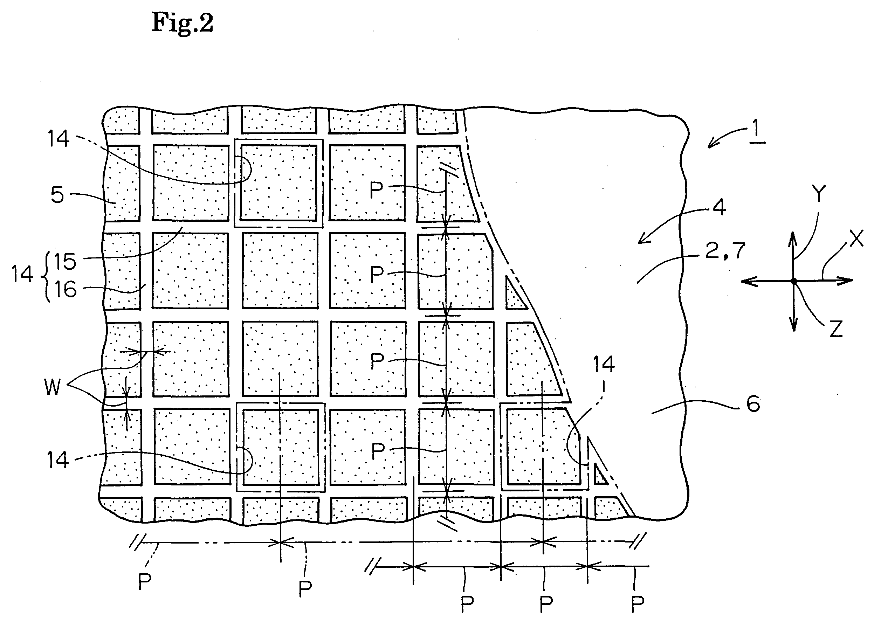

In Figs. 1 and 2, the reference character 1 denotes a pigment-applied film assembly used as a tent or the like.

Said pigment-applied film assembly 1 comprises a substrate fabric 4 with two outer surfaces 2 and 3, at least one outer surface 2 being plain, a pigment layer 5 applied to said one outer surface 2 of said substrate fabric 4 to provide a color pattern, a transparent resin film 8 covering the respective outer surfaces 7 of a nonpigment-applied portion 6 defined on said one outer surface 2 of said substrate fabric 4 and said pigment layer 5 from the outside and heat welded to these outer surfaces 7, a titanium oxide coating 10 adhered to the outer surface 9 of said transparent resin film 8, and another resin film 11 adhered to the other outer surface 3 of said substrate fabric 4.

Said substrate fabric 4 is a woven or knitted fabric of polyester; however, it may be a nonwoven fabric of other resin material. Further, said pigment-applied film assembly 1 is plain and white or of pale color as a whole including its outer surfaces 2 and 3.

The pigment forming said pigment layer 5 is a fine powder having a color, such as red, yellow or blue, that is insoluble in water, organic solvent, oil, resin, plasticizer or the like. Further, said pigment is preferably an inorganic pigment, such as oxide or sulfide, but it may be an organic pigment, such as azo pigment. Said pigment is mixed with paste and this sticky mixture is applied to the outer surface 2 of said substrate fabric 4.

Besides said pigment layer 5, another pigment layer 5 (not shown) is arranged on the outer surface 2 of said substrate fabric 4, and the colors of these pigment layers 5 are the same or different. The ends of the adjacent pigment layers 5 are separated from each other or slightly overlap each other in the direction of the thickness of the pigment layer 5.

Said transparent resin film 8 is a film of incombustible thermoplastic vinyl chloride resin, including semitransparent films, and is adhered and welded to the outer surfaces 7 of the nonpigment-applied portion 6 defined on said one outer surface 2 of said substrate fabric and said pigment layer 5.

Said pigment layer 5 is formed with a number of slit-like fine passageways 14 that extend in the direction of the thickness thereof (that is the same as the direction of the thickness of the pigment-applied film assembly 1) , Z, and whose width dimension W is very small. As a result, said pigment layer 5 comprises actually existing fine block-like pigment islands and fine passageways 14. Said fine passageways 14 are filled with part 8a of said transparent resin film 8 by heat fusion to be welded to said substrate fabric 4. Said width dimension W, which is not always constant as viewed longitudinally of said fine passageways 14, is preferably about 0.08 to 0.2 mm; therefore, in this case, the proportion of the total area of said fine passageways 14 per unit area (cm²) of the pigment layer 5 is preferably about 20 to 40%.

If said numerical values are less than their respective lower limits, then the filling of part 8a of the transparent resin film 8 in the fine passageways 14 becomes insufficient and said part 8a is not fully welded to the substrate fabric 4. Reversely, if said numerical values are greater than their respective upper limits, then the total area of the fine passageways 14 becomes too large, detracting from the appearance of the pigment layer 5.

Said fine passageways 14 are provided with a number of transverse passageways 15 extending in parallel to each other in the direction X along the outer surface 2 of said substrate fabric 4, and a number of longitudinal passageways 16 extending in parallel to each other in the direction Y orthogonal to said direction X. Said transverse passageways 15 are arranged at equal intervals (P) and said longitudinal passageways 16 are arranged also at equal intervals (P) , said both intervals (P) being substantially equal. As a result, said fine passageways 14 are arranged in lattice form as viewed in said thickness direction Z.

Further, said fine passageways 14 are formed in the directions (X and Y) along the pigment layer 5 and substantially over the entire pigment layer 5.

According to the above arrangement, in the portions of the pigment layer 5 in the directions (X and Y) along the pigment layer 5, part 8a of the transparent resin film 8 is welded to said substrate fabric 4 through said fine passageways 14 and, furthermore, said fine passageways 14 are arranged at equal intervals (P), as described above; therefore, the welding to the substrate fabric 4 through these fine passageways 14 is effected substantially uniformly in the portions of the pigment layer 5 in said directions (X and Y).

Therefore, in the portions of the pigment layer 5, the strength of adhesion of the transparent resin film 8 to said substrate fabric 4 is improved substantially uniformly.

Thus, even when a large external force is applied to the pigment-applied film assembly 1, the peeling between the substrate fabric 4 and the transparent resin film 8 in the applied position of said pigment layer 5 is prevented more reliably, a fact which is useful for the life of the pigment-applied film assembly 1.

Further, as described above, said fine passageways 14 are arranged in lattice or stripe form as viewed in the thickness direction Z.

Therefore, the strength of adhesion between the substrate fabric 4 and the transparent resin film 8 in the applied position of the pigment layer 5 is more improved than when said fine passageways 14 are dot-shaped.

Thus, the peeling between the substrate fabric 4 and the transparent resin film 8 is prevented more reliably.

Further, as described above, the pigment-applied film assembly 1 is provided with the titanium oxide coating 10 adhered to the outer surface 9 of the transparent resin film 8.

Therefore, the working of said titanium oxide coating 10 to function as a photocatalyst prevents organic substances, such as mold from growing on the outer surface 9 of said transparent resin film 8; thus, the soil resistance of the outer surface 9 is maintained for a long time.

Thus, when the pigment layer 5 is formed with a number of fine passageways 14, as described above, the presence of these fine passageways 14 tends to detract from the appearance of the coloring of the pigment layer 5; however, the soil resistance of the outer surface 9 of the transparent resin film 8 provided by said titanium oxide coating 10 compensates for degradation of the appearance of the pigment layer 5, so that the appearance of the pigment-applied film assembly 1 is kept in good condition for a long time.

Said resin film 11 is made of the same material as that of said transparent resin film 8 and is firmly adhered to the other outer surface of said substrate fabric 4 by an adhesive or by welding.

Therefore, said substrate fabric 4 is reinforced by the resin film 11, which also prevents penetration of rain water into said substrate fabric 4; said substrate fabric 4 is prevented from being overstretched by an external force thereon.

Thus, the peeling between said substrate fabric 4 and said transparent resin film 8 at the applied position of said pigment layer 5 is prevented the more reliably because overstretching of said substrate fabric 4 is prevented.

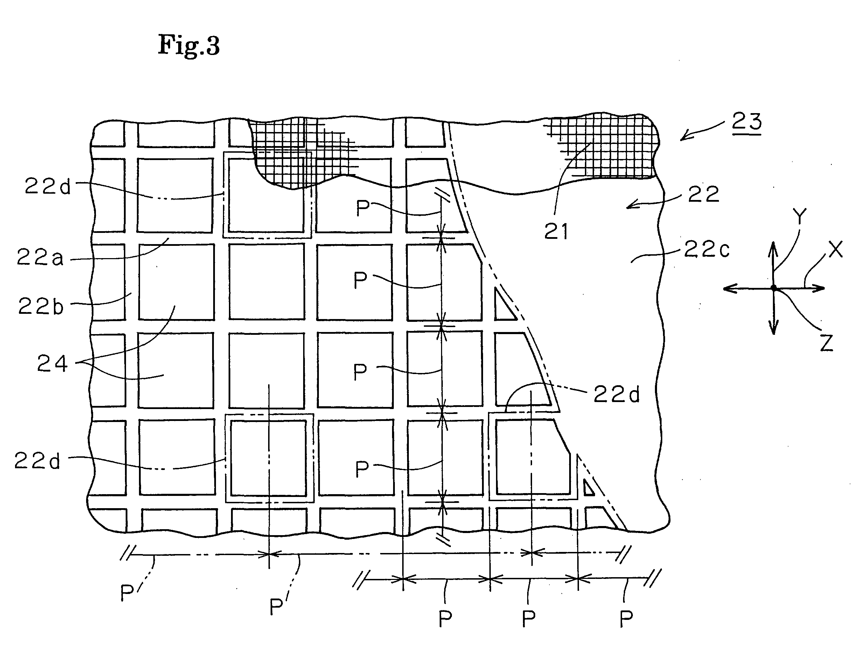

In Figs. 1 and 3, the forming procedure for said pigment-applied film assembly 1 will now be described.

First, a screen material 21 having numbers of warp and weft threads that are joined together is prepared. This screen material 21 is of 100-mesh, for example, and has very fine openings defined between said warp and weft threads. By using said screen material 21 and in accordance with the known photographic method using a light-sensitive film, a printing film 22 is locally attached to the screen material 21 to provide a desired screen 23.

Said printing film 22, in the position corresponding to said pigment layer 5, comprises a number of transversely elongated films 22a disposed at equal intervals (P), and a number of longitudinally elongated films 22b orthogonally crossing said transversely elongated films 22a, the portions surrounded by these transversely and longitudinally elongated films 22a and 22b are openings 24 that allow the pigment A to pass therethrough. Further, at the position corresponding to said nonpigment-applied portion 6, said screen material 21 has an entire-surface film 22c attached thereto.

By employing the mimeograph method using said screen 23, the pigment A is passed through said screen 23 to apply the pigment layer 5 to the predetermined position on said one outer surface 2 of said substrate fabric 4. Thereupon, the pigment layer 5 is formed with said transverse passageways 15 by said transversely elongated films 22a and with said longitudinal passageways 16 by said longitudinally elongated films 22b in such a manner as to have the width dimensions W corresponding to the respective width dimensions of the transversely and longitudinally elongated films 22a and 22b of said printing film 22.

In addition, the above has been described according to the illustrated example; however, the pigment layer 5, transparent resin film 8, and titanium oxide coating 10 may be adhered to the other outer surface 3 of said substrate fabric 4 as is the case with said one outer surface 2. In this case, if said pigment-applied film assembly 1 is made permeable to the outside light, then the color patterns of the pigment layers 5 on the outer surfaces 2 and 3 of said substrate fabric 4 are simultaneously visible, a fact that is preferable from the standpoint of appearance.

Further, the angle between said directions X and Y may be other than 90 degrees.

Further, the width dimension of either the transverse passageways 15 or the longitudinal passageways 16, which are the fine passageways 14, may be made smaller so that their width dimensions W may differ. Further, either the transverse passageways 15 or the longitudinal passageways 16 may be eliminated. That is, said fine passageways 14, when viewed in the thickness direction, may be in stripe form. To realize this arrangement, it is preferable that the width dimension of the transversely elongated passageways 22a or of the longitudinally elongated passageways 22b for forming said one group of passageways be smaller or zero.

Further, said resin film 11 may be opaque and may be of a resin different from that of the transparent resin film 8.

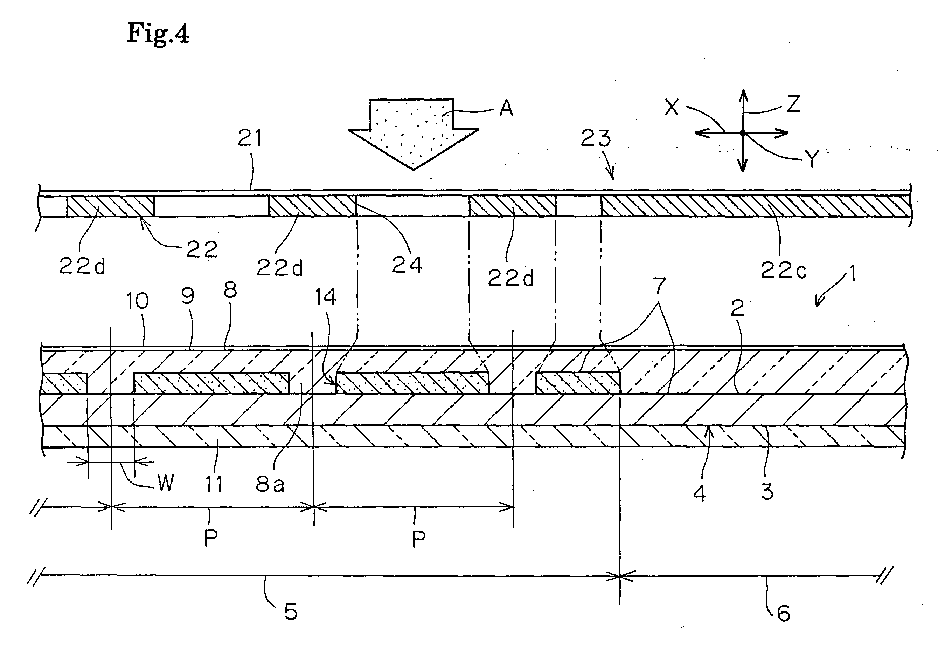

Phantom lines in Figs. 2 and 3 and Fig. 4 show another embodiment.

According to this embodiment, the fine passageways 14 are dot-shaped with a very small cross-sectional area and disposed at substantially equal intervals (P) in the directions X and Y.

The cross-sectional area of each fine passageway 14 is not constant among these fine passageways 14, and is preferably about 0.001 to 0.25 mm², and the proportion of the total area of said fine passageways 14 per unit area of the pigment layer 5 is preferably about 20 to 40%, as in the above. The reason for adopting such numerical values is the same as the above.

When the pigment-applied film assembly 1 having said fine passageways 14 is to be molded, dot-shaped films 22d are attached to the screen material 21 at positions corresponding to the fine passageways 14 of the pigment layer 5, thereby forming the screen 23.

And said screen 23 is used to apply pigment to predetermined positions on said one outer surface 2 of the substrate fabric 4, when almost all of said pigment is applied to the outer surface 2 of said substrate fabric 4 while avoiding said dot-shaped films 22d, part of the pigment entering the lower regions of the outer edges of said dot-shaped films 22d to be applied to the outer surface 2 of said substrate fabric 4, whereby the pigment layer 5 is formed. Thus, the pigment layer 5 is formed with a number of fine passageways 14 whose cross sections have indefinite dot shapes, including approximately circular and rectangular shapes, said fine passageways 14 being scattered as viewed in the thickness direction Z.

Since the rest of the arrangement, functions and effects are the same as in the preceding embodiment, common reference characters are entered in the drawings to omit a repetitive description thereof.

In addition, said pigment layer 5 may be formed not only with dot-shaped fine passageways 14 arranged in lattice or stripe form but also with dot-shaped fine passageways 14 such that they are scattered. Further, part of the pigment layer 5 may be formed with said fine passageways 14 arranged in lattice and/or stripe form and the other portion of the pigment layer 5 may be formed with said dot-shaped fine passageways 14 may be formed such that they are scattered. Further, said dot-shaped fine passageways 14 may be formed to have a staggered arrangement.

Further, the invention may be implemented by suitably combining said individual constituent members.

## Claims

1. A pigment-applied film assembly comprising a pigment-applied film assembly comprising a substrate fabric (4) with two outer surfaces (2, 3) , at least one outer surface (2) being plain, a pigment layer (5) applied to said one outer surface (2) of said substrate fabric (4), and a transparent resin film (8) covering the respective outer surfaces (7) of a nonpigment-applied portion (6) defined on said one outer surface (2) of said substrate fabric (4) and said pigment layer (5) from the outside and welded to these outer surfaces (7), said pigment-applied film assembly being characterized in that
said pigment layer (5) is formed with a number of fine passageways (14) whose width dimension (W) extending in the thickness direction (Z) is very small and/or cross-sectional area is very small, part (8a) of said transparent resin film (8) being filled in these fine passageways (14) by fusion and welded to said substrate fabric (4), said fine passageways (14) being arranged at substantially equal intervals in the directions (X, Y) along the outer surface of said substrate fabric (4).

2. A pigment-applied film assembly as set forth in Claim 1, characterized in that the fine passageways (14) in which said width dimension (W) is very small are arranged in lattice or stripe form as viewed in said thickness direction (Z).

3. A pigment-applied film assembly as set forth in Claim 1 or 2, characterized in that said assembly has a titanium oxide coating (10) adhered to the outer surface (9) of said transparent resin film (8).

4. A pigment-applied film assembly as set forth in Claim 1 or 2, characterized in that said assembly has another resin film (11) adhered to other outer surfaced (3) of said substrate fabric (4).
